## Europäisches Patentamt

(19) **European Patent Office**

**Office européen des brevets**

(11) Veröffentlichungsnummer: **0 106 045**
**B1**

(12)
# EUROPÄISCHE PATENTSCHRIFT

(45) Veröffentlichungstag der Patentschrift:
28.01.87

(51) Int. Cl.⁴: **H 02 H 3/33**

(21) Anmeldenummer: **83107658.3**

(22) Anmeldetag: **03.08.83**

(54) **Fehlerstromschutzschalter.**

(30) Priorität: **17.08.82 DE 3230557**

(43) Veröffentlichungstag der Anmeldung:
**25.04.84 Patentblatt 84/17**

(45) Bekanntmachung des Hinweises auf die Patenterteilung:
**28.01.87 Patentblatt 87/5**

(84) Benannte Vertragsstaaten:
**AT CH DE FR IT LI**

(56) Entgegenhaltungen:
**EP - A - 0 039 280**
**DE - A - 2 036 497**
**DE - A - 2 424 205**
**DE - A - 2 429 446**
**DE - A - 2 845 993**
**DE - B - 2 540 815**
**US - A - 4 093 977**

(73) Patentinhaber: **Siemens Aktiengesellschaft Berlin und München, Wittelsbacherplatz 2, D-8000 München 2 (DE)**

(72) Erfinder: **Stich, Karl-Heinz, Friedrich-Ebert-Strasse 10, D-8400 Regensburg (DE)**
Erfinder: **Solleder, Reinhard, Dipl.-Ing., Maxstrasse 6, D-8411 Hainsacker (DE)**

ACTORUM AG

## Beschreibung

Die Erfindung bezieht sich auf einen Fehlerstromschutzschalter nach Gattungsbegriff von Patentanspruch 1. Ein bekannter derartiger Fehlerstromschutzschalter (US-A-4 093 977) weist aktive elektronische Bauelemente zwischen Summenstromwandler und Auslöseeinrichtung auf, die durch einen zum Summenstromwandler parallel geschalteten spannungsabhängigen Widerstand gegen Überlastung geschützt werden.

Gewitterüberspannungen in Niederspannungsanlagen und allgemein Schaltüberspannungen in elektrischen Anlagen können Fehlerstromschutzschalter auslösen, was zumindest lästig ist, in Einzelfällen auch zu Schaden führen kann. So beispielsweise bei Gefrier- und Kühlgeräten, in denen aufbewahrte Lebensmittel verderben können, wenn die Geräte unbemerkt abgeschaltet werden. Man fordert daher seit einiger Zeit, dass Fehlerstromschutzschalter stossstromfest sein sollen (beispielsweise gemäss VDE 033 eine Stossstromfestigkeit hinsichtlich 500 A und 8/20 μs). Dennoch sind zufriedenstellende Lösungen bisher nicht auf den Markt gelangt.

Der Erfindung liegt die Aufgabe zugrunde, mit einfachen Mitteln einen Fehlerstromschutzschalter gängiger Bauart, der ohne aktive elektronische Bauelemente arbeitet, so zu ertüchtigen, dass er stossstromfest ist.

Die Lösung der geschilderten Aufgabe erfolgt durch einen Fehlerstromschutzschalter mit den kennzeichnenden Merkmalen des Patentanspruchs 1. Die Anschlussleitungen zur Auslöseeinrichtung sind also durch einen spannungsabhängigen Widerstand einer solchen Charakteristik überbrückt, dass, oberhalb einer Schwelle, mit steigender Spannung der Widerstand sinkt. Die Schwelle des Widerstandes wird günstigerweise so gewählt, dass sie gerade oberhalb der einschlägigen Ansprechspannung liegt. Spannungsspitzen durch Stossstrom, die oberhalb der Schwelle liegen, werden dabei vor der Auslöseeinrichtung kurzgeschlossen.

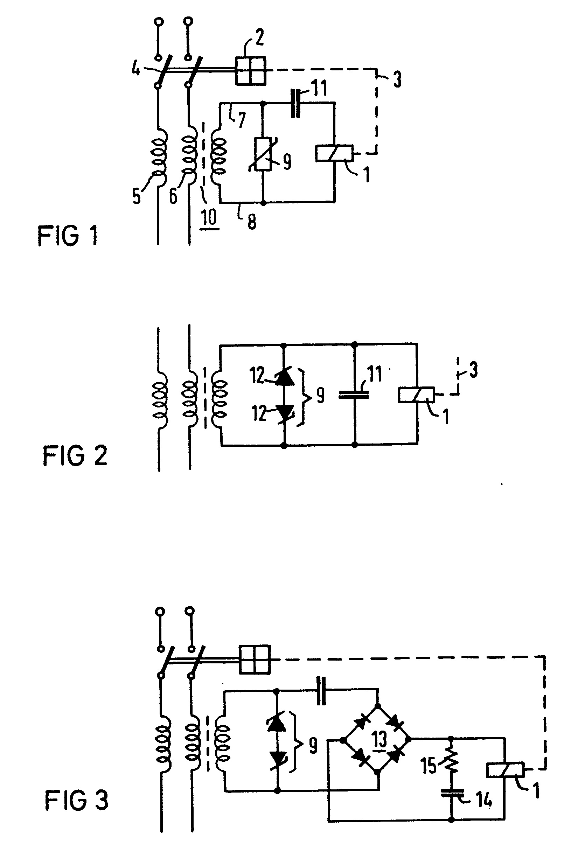

Die geschilderte Lösung wird also gerade dann vorgesehen, wenn keine empfindlichen aktiven elektronischen Bauelemente wie Transistoren, Thyristoren oder integrierte Schaltkreise verwendet werden. Der spannungsabhängige Widerstand ist darauf abgestimmt, Fehlauslösungen des Fehlerstromschutzschalters zu vermeiden. Beim eingangs geschilderten bekannten Fehlerstromschutzschalter (US-A-4 093 977) wird bei Einsatz von empfindlichen elektronischen Bauelementen (Transistoren Q1, Q2; Thyristor 60) die elektronische Schaltung selbst gegen Beschädigung durch Überspannungen geschützt. In einem derartigen Zusammenhang ist es bekannt (DE-A-2 845 993), durch einen Entlader (10 nach Fig. 3 oder 4) Schäden an der Elektronik selbst, insbesondere an Spannungs-Multiplikatoren (11 nach Fig. 1) zu vermeiden. Zum Schutz von umfangreichen elektronischen Schaltungen bei elektronischen Fehlerstromschutzschaltern ist es auch bekannt, bei (DE-A-2 424 205) empfindlichen elektronischen Bauelementen durch eine Zenerdiode parallel zum Summenstromwandler zusammen mit einer Reihenschaltung aus Kondensator und einem Widerstand auftretende Stromstösse zu absorbieren und von den zu schützenden Bauelementen abzuhalten. Erfindungsgemäss wird dagegen bei einem Fehlerstromschutzschalter ohne empfindliche elektronische Bauelemente, ohne aktive Bauelemente, ein spannungsabhängiger Widerstand der geschilderten Charakteristik zwischen die Anschlussleitungen zur Auslöseeinrichtung eingeschaltet, um Fehlauslösungen zu vermeiden.

Der Fehlerstromschutzschalter kann insbesondere einen Summenstromwandler aufweisen, in dessen Sekundärkreis ein Auslöser, nach dem Haltemagnetprinzip, angeordnet ist. Überraschenderweise eignet sich die geschilderte Lösung auch bei Fehlerstromschutzschaltern, die auf Gleichstromkomponenten ansprechen. Eine solche Lösung ist für sich bekannt (DE-A-2 036 497). Danach ist im Sekundärkreis wirkungsmässig in Reihenschaltung zur Auslösespule des Auslösers, beispielsweise in der Ausbildung als Haltemagnet, ein Kondensator angeordnet, der auf die Frequenz zumindest in etwa resonant abgestimmt ist, die ein primärseitiger Fehlerstrom sekundärseitig hervorruft. Ein solcher Fehlerstromschutzschalter ist in Verbindung mit dem zuvor geschilderten spannungsabhängigen Widerstand nicht nur sensitiv für Fehlerströme mit Gleichstromkomponenten, sondern er ist auch unempfindlich gegen Stossströme, entsprechend neueren Forderungen (beispielsweise nach VDE 0664 Teil 1/5.81). Der Kondensator zur Resonanzabstimmung kann in an sich bekannter Weise im Sekundärkreis auch in Parallelschaltung zum Auslöser zwischen dem spannungsabhängigen Widerstand und dem Auslöser angeordnet sein.

Dabei ist es bekannt, einen Fehlerstromschutzschalter zur Erfassung von Wechselfehlerströmen durch ein Zusatzteil nachträglich zu einem Fehlerstromschutzschalter umzurüsten, der auch bei Gleichfehlerströmen auslöst (DE-A-2 429 446).

Eine andere Funktion erfüllen Zenerdioden in Speicherschaltungen bekannter Art (EP-A-0 039 280), wodurch bei einem Fehlerstromschutzschalter in einem Kondensator Auslösesignale aufsummiert werden, bis die Zenerdiode die gespeicherte Energie auf eine Auslöseeinrichtung gibt. Eine solche Zenerdiode dient also zum Auslösen eines Fehlerstromschutzschalters mit Speicherschaltung.

Der spannungsabhängige Widerstand lässt sich in an sich bekannter Weise realisieren: Er kann ein Varistor sein oder durch zwei in ihrer Durchlassrichtung einander entgegengesetzt gerichtete Zenerdioden gebildet werden.

Die Erfindung soll anhand von in der Zeichnung grob schematisch wiedergegebenen Ausführungsbeispielen näher erläutert werden:

In Fig. 1 ist ein Fehlerstromschutzschalter mit einem spannungsabhängigen Widerstand und mit einem Kondensator veranschaulicht, der unempfindlich gegen Stossströme, jedoch sensitiv für Fehlerströme mit Gleichstromkomponenten ist. In Fig. 2 ist ein Fehlerstromschutzschalter mit einem Sekundärkreis eines Summenstromwandlers wiedergegeben, dessen spannungsabhängiger Widerstand durch zwei Zenerdioden gebildet ist, wobei der Kondensator in Parallelschaltung angeordnet ist.

In Fig. 3 ist ein Fehlerstromschutzschalter mit Speicher wiedergegeben, der mit den zuvor geschilderten Vorkehrungen versehen ist, um unempfindlich gegen Stossströme, jedoch empfindlich für pulsierende Fehlerströme – also Fehlerströme mit Gleichstromkomponenten – zu werden.

Der Fehlerstromschutzschalter nach Fig. 1 arbeitet mit einer Auslöseeinrichtung 1, im Ausführungsbeispiel einem Auslöser in der Bauweise als Haltemagnet mit der wiedergegebenen Auslösespule. Die Auslöseeinrichtung 1 steht mit einem Schaltschloss 2 in Eingriffverbindung 3. Das Schaltschloss wirkt auf Schaltkontakte 4 ein, die in zu überwachenden Leitungen 5 und 6 angeordnet sind. Die Anschlussleitungen 7, 8 zur Auslöseeinrichtung 1 sind durch einen spannungsabhängigen Widerstand 9 überbrückt. Der Widerstand 9 weist eine solche Charakteristik auf, dass, oberhalb einer Schwelle, mit steigender Spannung der Widerstand sinkt. Er kann ein Varistor sein.

Die zu überwachenden Leitungen 5, 6 können insbesondere Wicklungen eines Summenstromwandlers 10 bilden, in dessen Sekundärkreis ein als Haltemagnet ausgebildeter Auslöser mit Auslösespule angeordnet ist. Diese bilden dann die Auslöseeinrichtung 1.

Im Sekundärkreis ist wirkungsmässig in Reihenschaltung zur Auslösespule ein Kondensator 11 angeordnet, der auf die Frequenz im Sekundärkreis zumindest in etwa resonant abgestimmt ist, die ein primärseitiger Fehlerstrom mit Gleichstromkomponenten sekundärseitig hervorruft. Dadurch wird der Fehlerstromschutzschalter empfindlich für Fehlerströme mit Gleichstromkomponenten.

Im Sekundärkreis kann auch nach Fig. 2 ein Kondensator 11 in Parallelschaltung zum Auslöser, der Auslöseeinrichtung 1, angeordnet sein, um den Fehlerstromschutzschalter empfindlich für Fehlerströme mit Gleichstromkomponenten zu machen. Der spannungsabhängige Widerstand wird im Ausführungsbeispiel durch zwei in ihrer Durchlassrichtung einander entgegengesetzt gerichtete Zenerdioden 12 gebildet.

Der Fehlerstromschutzschalter nach Fig. 3 ist im Sekundärkreis in an sich bekannter Weise als Speicherschaltung ausgebildet. Besonders günstig ist jedoch, dass zwischen dem spannungsabhängigen Widerstand 9 und dem Auslöser, der Auslöseeinrichtung 1, eine Gleichrichterbrückenschaltung 13 angeordnet ist, in deren Brückenzweig der Auslöser und in Parallelschaltung hierzu ein Speicherkondensator 14 mit vorgeschaltetem Widerstand 15 angeordnet ist.

Der Fehlerstromschutzschalter nach Fig. 1, mit einem Varistor oder mit zwei gegensinnig geschalteten Zenerdioden, ist jedoch besonders einfach und erfüllt die gestellten Anforderungen hinsichtlich guter Empfindlichkeit gegen Wechselstrom-Fehlerströme und gegen Fehlerströme mit Gleichstromkomponenten, und er ist dennoch gegen Stossströme unempfindlich, obwohl sich diese Forderungen zu widersprechen scheinen.

## Patentansprüche

1. Fehlerstromschutzschalter mit einem Summenstromwandler (10), in dessen Sekundärkreis eine Auslöseeinrichtung (1) angeordnet ist, die mit einem Schaltschloss (2) in Eingriffverbindung (3) steht, das auf Schaltkontakte (4) in zu überwachenden Leitungen (5, 6) einwirkt, dadurch gekennzeichnet, dass bei einem Schutzschalter ohne aktive elektronische Bauelemente zur Vermeidung von überspannungsbedingten Fehlauslösungen Anschlussleitungen (7, 8) zwischen dem Summenstromwandler (10) und der Auslöseeinrichtung (1) durch einen spannungsabhängigen Widerstand (9) mit einer solchen Charakteristik überbrückt sind, dass, oberhalb einer Schwelle, mit steigender Spannung der Widerstand sinkt.

2. Fehlerstromschutzschalter nach Anspruch 1, dadurch gekennzeichnet, dass er einen Summenstromwandler (10) aufweist, in dessen Sekundärkreis die Auslöseeinrichtung angeordnet ist.

3. Fehlerstromschutzschalter nach Anspruch 2, dadurch gekennzeichnet, dass im Sekundärkreis wirkungsmässig in Reihenschaltung zur Auslöseeinrichtung (1) ein Kondensator (11) angeordnet ist, der auf die Frequenz zumindest in etwa resonant abgestimmt ist, die ein primärseitiger Fehlerstrom mit Gleichstromkomponenten sekundärseitig hervorruft (Fig. 1).

4. Fehlerstromschutzschalter nach Anspruch 2, dadurch gekennzeichnet, dass im Sekundärkreis in Parallelschaltung zur Auslöseeinrichtung (1) zwischen dem spannungsabhängigen Widerstand (9) und der Auslöseeinrichtung (1) ein Kondensator (11) eingeschaltet ist, der auf die Frequenz zumindest in etwa resonant abgestimmt ist, die ein primärseitiger Fehlerstrom mit Gleichstromkomponenten sekundärseitig hervorruft (Fig. 2).

5. Fehlerstromschutzschalter nach Anspruch 2, dadurch gekennzeichnet, dass der spannungsabhängige Widerstand (9) durch zwei in ihrer Durchlassrichtung einander entgegengesetzt gerichtete Zenerdioden (12) gebildet ist.

6. Fehlerstromschutzschalter nach Anspruch 1, dadurch gekennzeichnet, dass zwischen dem spannungsabhängigen Widerstand (9) und der Auslöseeinrichtung (1) eine Gleichrichterbrückenschaltung (13) angeordnet ist, in deren Brükkenzweig die Auslöseeinrichtung (1) und in Parallelschaltung hierzu ein Speicherkondensator (14)
mit vorgeschaltetem Widerstand (15) angeordnet
ist.

## Claims

1. An earth leakage circuit-breaker comprising a sum current transformer (10), the secondary circuit of which contains a circuit-breaking device (1) which is in latching engagement (3) with a switch lock (2) which itself acts upon switching contacts (4) in the lines (5, 6) to be monitored, characterised in that in a circuit-breaker which has no active electronic components, in order to avoid incorrect circuit breakage due to excess voltages, connection lines (7, 8) between the sum current transformer (10) and the circuit-breaking device (1) are bridged by a voltage-dependent impedance (9) having a characteristic such that the impedance falls with rising voltage above a threshold.

2. An earth leakage circuit-breaker as claimed in Claim 1, characterised in that the secondary circuit of the sum current transformer (10) contains the circuit-breaking device.

3. An earth leakage circuit-breaker as claimed in Claim 2, characterised in that a capacitor (11) is arranged in the secondary circuit to be operatively connected in series with the circuit-breaking device (1), said capacitor being tuned to be at least approximately resonant at the frequency produced across the secondary by a primary leakage current with d.c. components (Fig. 1).

4. An earth leakage circuit-breaker as claimed in Claim 2, characterised in that a capacitor (11) is connected in parallel to the circuit-breaking device in the secondary circuit (1) between the voltage-dependent impedance (9) and the circuit-breaking device (1), said capacitor (11) being tuned to be at least approximately resonant at the frequency produced across the secondary by a primary leakage current with d.c. components (Fig. 2).

5. An earth leakage circuit-breaker as claimed in Claim 2, characterised in that the voltage-dependent impedance (9) is formed by two Zener diodes (12) having mutually opposed directions of conductivity.

6. An earth leakage circuit-breaker as claimed in Claim 1, characterised in that between the voltage-dependent impedance (9) and the circuit-breaking device (1) there is arranged a rectifier bridge circuit (12), the bridge arm of which contains the circuit-breaking device (1) and, in parallel therewith, a storage capacitor (14) connected in series with an impedance (15).

## Revendications

1. Disjoncteur de protection contre les courants de défaut, comprenant un transformateur de courant totalisateur (10) dont le circuit secondaire contient un dispositif de déclenchement (1) qui est en liaison de commande (3) avec un verrou de maintien (2) agissant sur des contacts de coupure (4) dans des lignes (5, 6) à surveiller, caractérisé en ce que, s'agissant d'un disjoncteur de protection sans composants électroniques actifs, pour éviter des déclenchements intempestifs par suite de surtensions, des lignes de connexion (7, 8) entre le transformateur de courant totalisateur (10) et le dispositif de déclenchement (1) sont shuntées par une résistance (9) dont la valeur varie en fonction de la tension qui lui est appliquée, ayant une caractéristique telle qu'au-dessus d'un seuil, sa valeur diminue lorsque la tension s'élève.

2. Disjoncteur selon la revendication 1, caractérisé en ce qu'il présente un transformateur de courant (10) dont le circuit secondaire contient le dispositif de déclenchement.

3. Disjoncteur selon la revendication 2, caractérisé en ce que le circuit secondaire contient, fonctionnellement en série avec le dispositif de déclenchement (1), un condensateur (11) qui est accordé au moins à peu près à résonance à la fréquence appliquée et qui provoque, côté secondaire, un courant de défaut avec des composantes de courant continu produit côté primaire (Fig. 1).

4. Disjoncteur selon la revendication 2, caractérisé en ce que le circuit secondaire contient, en parallèle avec le dispositif de déclenchement (1), entre la résistance variable (9) et le dispositif de déclenchement (1), un condensateur (11) qui est accordé au moins à peu près à résonance à la fréquence utilisée et qui provoque, côté secondaire, un courant de défaut avec des composantes de courant continu produit côté primaire (Fig. 2).

5. Disjoncteur selon la revendication 2, caractérisé en ce que la résistance variable (9) est formée par deux diodes Zener (12) montées en opposition par leur sens passant.

6. Disjoncteur selon la revendication 1, caractérisé en ce qu'un montage redresseur en pont (13) est prévu entre la résistance variable (9) et le dispositif de déclenchement (1), le circuit de sortie courant continu de ce montage contenant le dispositif de déclenchement (1) et, parallèlement à lui, un condensateur de mémorisation (14) précédé d'une résistance (15).

FIG 1

FIG 2

FIG 3